# EUROPÄISCHE PATENTSCHRIFT

(11) **EP 1 534 440 B1**
(45) Veröffentlichungstag und Bekanntmachung des Hinweises auf die Patenterteilung: **19.04.2006**
(21) Anmeldenummer: 03747815.3
(22) Anmeldetag: 21.08.2003
(51) Int. Cl.: B07C 3/10

(54) **VERFAHREN UND VORRICHTUNG ZUM LESEN DER ADRESSEN VON SENDUNGEN**
METHOD AND DEVICE FOR READING THE ADDRESSES OF MAILINGS
PROCEDE ET DISPOSITIF DE LECTURE D'ADRESSES DE MESSAGES

(30) Priorität: 03.09.2002 DE 10240470
(43) Veröffentlichungstag der Anmeldung: 01.06.2005
(73) Patentinhaber: SIEMENS AKTIENGESELLSCHAFT, 80333 München (DE)
(72) Erfinder: VOLLMANN, Klaus, 78467 Konstanz (DE)
(86) Internationale Anmeldenummer: PCT/DE2003/002798
(87) Internationale Veröffentlichungsnummer: WO 2004/022253

(56) Entgegenhaltungen:
- EP-A- 1 229 483
- EP-A- 1 229 484
- DE-C- 10 064 529

## Beschreibung

Die vorliegende Erfindung betrifft ein Verfahren und eine Vorrichtung zum Lesen der Adressen von Sendungen nach den Oberbegriffen der Ansprüche 1 und 5.

Systeme zum automatischen Lesen von Adressen (OCR) sind auf dem Gebiet der Briefbearbeitung wohlbekannt und z.B. in der DE 195 31 392 C1 beschrieben. Mit modernen OCR-Sendungssortieranlagen sind Bearbeitungsraten von 10 Briefen pro Sekunde, d.h. 36.000 Briefen pro Stunde und mehr erreichbar. Die Erkennungszuverlässigkeit variiert jedoch stark mit der Schriftart und Gesamtqualität der auf die Oberfläche der Briefe aufgebrachten Adressinformation. Im Falle einer erfolgreichen Erkennung kann die betreffende Sendung mit einem maschinenlesbaren Barkode versehen werden. Dieser Barkode erlaubt eine weitere mechanische Bearbeitung bis zu einer beliebigen gewünschten Sortierordnung. Insbesondere ermöglicht die Verwendung von Barkodes eine Sortierung der Sendungen bis zur Sortierebene des Postgangs, bei der Sendungen entsprechend der Reihenfolge ihrer Verteilung durch den Zusteller sortiert werden.

Da die Erkennungsraten der automatischen Lesesysteme sehr variieren, ist es notwendig, diese durch Videokodiereinrichtungen zu unterstützen. Hierbei werden die Videobilder der von der OCR-Einrichtung zürückgewiesenen Sendungen von Videokodierkräften an entsprechenden Videokodierplätzen manuell kodiert. Dabei werden die eingegebenen Adressen mittels eines Verzeichnisses in einen Sortierkode umgewandelt.

Um die Kodierproduktivität zu erhöhen und/oder die Angabe von sämtlichen Adresselementen, d.h. ZIP/PC, Straße/Postfach, Adressat/Postfach, Adressat/Firma, zu ermöglichen, sind folgende wesentliche Methoden bekannt:

### Extraktionskodierung

Da bei dem praktisch erreichbaren Online-Verzögerungs-Zeiten lediglich die ZIP/PC Adresselemente verlässlich vom Operateur eingegeben werden können, werden beim Extraktionskodieren bestimmte Schlüsselbestandteile eingegeben. Üblicherweise basiert die Extraktionskodierung auf speziell entwickelten Regeln, bei denen ein Kode fester Länge, als Zugangsschlüssel zu einem Adressverzeichnis verwendet wird. Zum Beispiel verwendet die Royal Mail eine Extraktionsformel, die auf den ersten drei und den letzten zwei Buchstaben basiert. Dabei müssen Sonderregeln vom Operateur auswendig gelernt werden, um überflüssige Adressinformationen zu vermeiden und bestimmte unterscheidende Merkmale wie z.B. Richtungen zu berücksichtigen, z.B. Ost, West oder Kategorien z.B. Street, Lane, Road.

### Selektionskodierung

Liegen nicht eindeutige Extrakte vor, bei denen mehrere Einträge in einem Verzeichnis dem Extraktionskode entsprechen oder liefert die OCR-Einheit eine begrenzte Anzahl von Adressalternativen, so wird in einer Selektionskodierung vom Operateur die richtige Adresse ausgewählt. Da hierbei vom Operateur statt einer einfachen repetitiven Tastatureingabe Entscheidungen getroffen werden müssen, ist bei der Selektionskodierung die Eingabeproduktivität der Operateure gegenüber der Extraktionskodierung vermindert.

In der EP 0 975 442 B1 wird ein Verfahren beschrieben, bei dem im Verlaufe des Leseprozesses beide Kodierungsverfahren eingesetzt werden. Kann die OCR-Einheit beim ersten Leseversuch die Adresse nicht eindeutig lesen, so wird eine Extraktionskodierung durchgeführt und mit dem Extraktionsergebnis erfolgt ein neuer OCR-Leseversuch. Ist er wieder nicht erfolgreich und im Ergebnis liegen noch einige Adressalternativen vor, wird anschließend in einer Selektionskodierung die richtige Adresse ausgewählt (Variante 1). Möglich ist auch, statt dessen noch eine Extraktionskodierung durchzuführen und, falls damit in der OCR-Einheit wieder kein eindeutiges Ergebnis erzielt wird, eine weitere Selektionskodierung vorzunehmen (Variante 2).
Der Nachteil hierbei ist, dass die Abfolge der Erkennungsschritte relativ starr festgelegt ist (entweder Variante 1 oder Variante 2 und zwar dann für alle Sendungen). Jedoch ist abhängig von der Adresse der jeweiligen Sendung manchmal die Variante 1 effizienter und manchmal die Variante 2. Variante 2 ist immer dann effizienter, wenn durch die Eingabe des Extrakts die fragliche Adresse oder das Adresselement eindeutig wird, weil Extraktionscodierung (ca. 2000 Sendungen pro Stunde) schneller ist als Selektionscodierung (ca. 1000 Sendungen pro Stunde). Variante 1 ist in jenen Fällen effizienter, wenn nur die Selektionskodierung durchgeführt werden muss anstatt Extraktions- und Selektionskodierung.

Der Erfindung liegt die Aufgabe zugrunde, ein Verfahren und eine Vorrichtung zum Lesen der Adressen von Sendungen unter Verwendung einer OCR-Einrichtung und einer Videokodiereinrichtung zu schaffen, mit denen der Leseprozess zeitlich verkürzt werden kann.

Erfindungsgemäß wird die Aufgabe durch die Merkmale der Ansprüche 1 und 5 gelöst.
Dabei wird bei einem nicht eindeutigen Leseergebnis aus der OCR-Einrichtung von Adressalternativen als Teilergebnis des OCR-Prozesses automatisch mit vereinbarten Extraktionsregeln jeweils ein Extrakt erzeugt und ermittelt, wie viele der Extrakte übereinstimmen oder nicht übereinstimmen. Als nächstes wird bei überwiegend oder nur unterschiedlichen Extrakten mittels der Videokodiereinrichtung eine Extraktionskodierung mit den vereinbarten Extraktionsregeln und bei überwiegend oder nur gleichen Extrakten als nächstes für die mit dem Abbild an die Videokodiereinrichtung übermittelten Adressalternativen eine Selektionskodierung durchgeführt, wenn die Anzahl der Adressalternativen einen Maximalwert nicht übersteigt.
Für jeden Brief wird die jeweils effizienteste Abfolge von Verarbeitungsschritten gewählt.
Bei überwiegend oder nur unterschiedlichen Extrakten wird als nächster Schritt Extraktionskodierung gewählt, da die Wahrscheinlichkeit groß oder sicher ist, dass nach dem Extraktionskodierschritt kein Selektionsschritt mehr nötig ist. Andererseits wird bei überwiegend oder nur gleichen Extrakten als nächster Schritt die Selektionskodierung gewählt, da die Wahrscheinlichkeit groß bzw. es sicher ist, dass nach einem Extraktionskodierschritt noch ein Selektionsschritt nötig und der Extraktionsschritt überflüssiger Aufwand wäre.

Vorteilhafte Ausgestaltungen der Erfindung sind in den Unteransprüchen dargelegt.

So ist es vorteilhaft, wenn der Maximalwert der Anzahl der Adressalternativen, bei der nach dem automatischen Lesen die Selektionskodierung durchgeführt wird, 10 beträgt. Dies erlaubt eine sehr schnelle Eingabe mit der Zahlenblocktastatur.

Vorteilhaft ist es auch, der OCR-Einrichtung zusätzlich zum betreffenden Abbild in einer vorher nach einem erfolglosen OCR-Lesevorgang durchgeführten Extraktionskodierung ermittelte Adressteilinformationen zuzuführen. Dadurch wird der Suchbereich und damit die Anzahl der möglichen Adressalternativen eingeschränkt.
Diese Adressteilinformationen sind günstiger weise Postkodes, wie z.B. Postleitzahlen.

Nachfolgend wird die Erfindung anhand der Zeichnung in einem Ausführungsbeispiel erläutert.

Dabei zeigen
- FIG 1: eine schematische Darstellung einer Vorrichtung zum Lesen;
- FIG 2: ein Flussbild des Verfahrensablaufes.

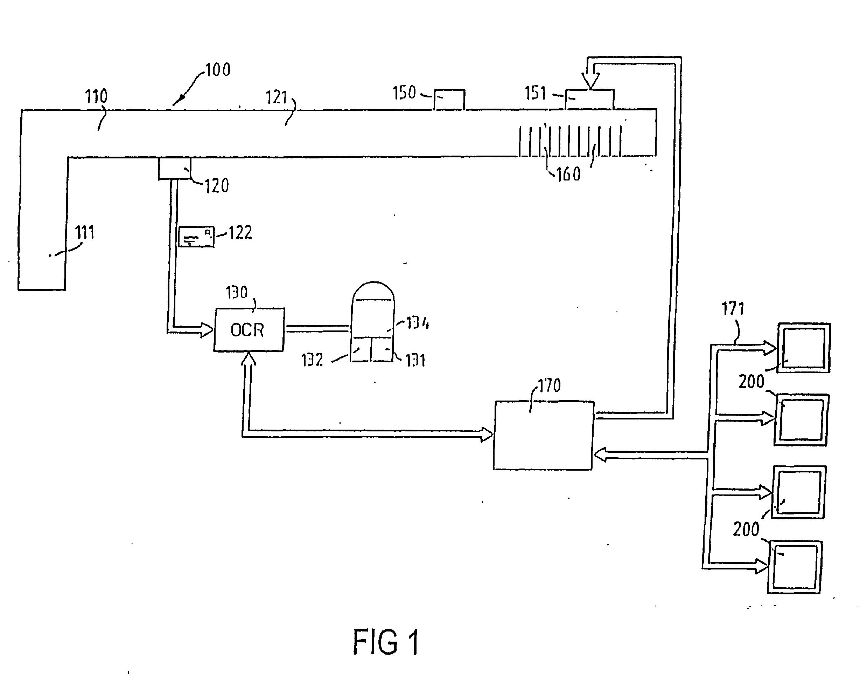

FIG 1 zeigt eine schematische Darstellung einer Sendungsverteilanlage, mit der das erfindungsgemäße Verfahren ausgeführt werden kann. Ein OCR-Sendungssortierer 100 besteht aus einer Zuführeinrichtung 110, die sukzessive Sendungen aus einem Magazin 111 abzieht und mit ca. 10 Sendungen pro Sekunde zu einer hochauflösenden Vorrichtung 120 zur Gewinnung von Abbildern der Sendungen (Scanner) transportiert. Anschließend werden die Sendungen in einer Verzöserungsstreke 121 transportiert. Die Sendungen weisen üblicherweise auf ihrer Oberfläche Adressinformationen auf. In einer OCR-Einrichtung 130 erfolgt eine Auswertung der Adressinformationen der Abbilder der Sendungen, die vom Scanner 120 gewonnen wurden. Im Fall einer vollständigen Auswertung wird ein Barkodedrucker 150 angesteuert und die Sendung wird mit einem entsprechenden Barkode für die anschließende Sortierung in Sortierfächer 160 versehen. Die OCR-Einrichtung 130 besitzt ein oder mehrere Mikroprozessoren 131 mit assoziiertem Speicher 132, um Abbilder der Sendungen zu speichern. Weiterhin beinhaltet die OCR-Einrichtung 130 ein Adressverzeichnis 134 mit Postkodes/ZIP-Codes, Städtenamen und Straßennamen und evtl. weiterer adressbezogener Information. Bei der Auswertung der Adressinformation aufweisenden Abbilder erfolgt eine merkmalsgesteuerte Reduktion der aus dem Adressverzeichnis gewonnenen Eintragung, so dass eine Art Teilwörterbuch erzeugt wird. In einzelnen Eintragungen werden dabei Glaubwürdigkeiten zugeordnet, so dass bei der Auswertung eine Anzahl von Daten von richtig erkannten Adressen erzeugt werden. Die Vorrichtung enthält weiterhin eine Ablaufsteuerung 170 sowie eine Anzahl Videokodierplätze 200, die mit der Ablaufsteuerung 170 direkt oder durch ein Netzwerk 171 verbunden sind. Falls die OCR-Auswertung eines Abbildes nicht, d.h. vollständig, erfolgreich war, wird dieses Bild von der OCR-Einrichtung 130 zur Ablaufsteuerung 170 transferiert, die einerseits einen TID Barkodedrucker 151 steuert und andererseits das entsprechende Bild zu einem der Videokodierplätze 200 sendet, die z.B. nach Kodierarten wie Extraktions- und Selektionskodierung unterteilt sind. Der TID Barkodedrucker 151 bringt auf die entsprechende Sendung einen Identifikationskode TID auf, der es zu einem späteren Zeitpunkt ermöglicht, die ausgewertete Adressinformation mit der physikalischen Sendung zu verknüpfen. Die Auswertung der Abbilder erfolgt in diesem Fall offline, obwohl grundsätzlich bei einer genügend langen Verzögerungszeit auch eine online-Auswertung durch Videokodierung möglich ist. Im letzteren Fall kann der TID auch zu einem späteren Zeitpunkt, d.h. wenn die Videokodierung innerhalb einer bestimmten vorgegebenen Zeit nicht zu einer vollständigen Auswertung geführt hat, auf die Sendungen aufgebracht werden.

In diesem Beispiel ist die Ablaufsteuerung 170 nur mit einem OCR-Sendungssortierer 100 mit OCR-Einrichtung 130 verbunden. Selbstverständlich ist die Kopplung auch mit mehreren OCR-Sendungssortierern möglich.

Zur Gewährleistung des Ablaufes beim Ermitteln der Adressen ist in diesem Beispiel ist die Ablaufsteuerung 170 derart ausgebildet, dass Abbilder mit den Ergebnissen der Videokodierung der OCR-Einrichtung 130 zu einer weiteren automatischen Adressauswertung zugeführt werden können, wenn bei der Videokodierung die Adressinformationen nicht vollständig ausgewertet wurden.

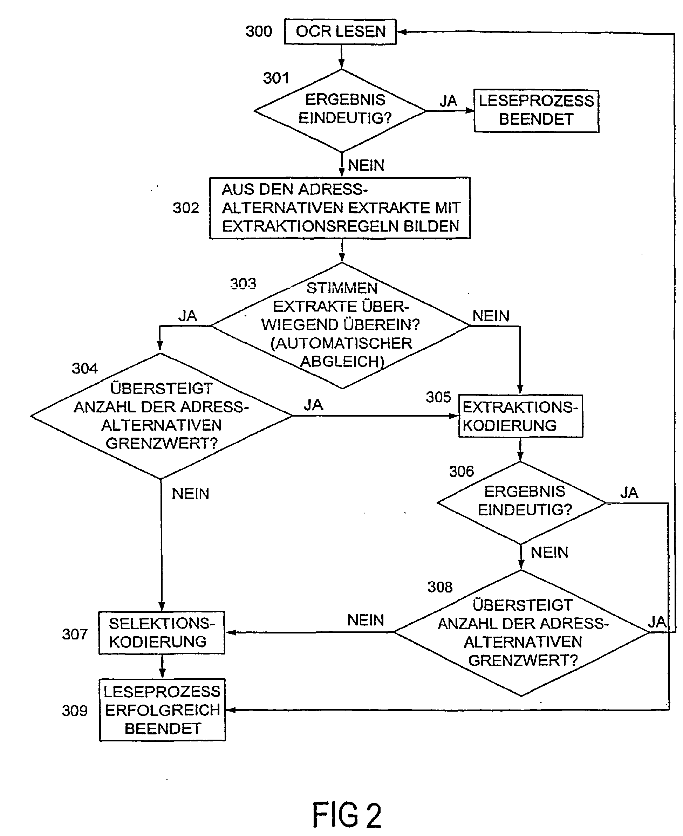

Der verfahrensmäßige Ablauf des gesamten Leseprozesses, der durch die Ablaufsteuerung 170 sichergestellt wird, ist in FIG 2 dargestellt.

Als erstes erfolgt in der OCR-Einrichtung 130 ein erster Leseversuch 300 mit einem übermittelten Abbild einer Sendung. Danach wird überprüft, ob das Leseergebnis eindeutig ist 301.

Wenn ja, ist das Lesen erfolgreich beendet, wenn nein, werden in der Ablaufsteuerung 170 aus den von der OCR-Einrichtung 130 erstellten Adressalternativen mit den für das Extraktionskodieren festgelegten Extraktionsregeln Extrakte erstellt 302 und ermittelt, wie viele der Extrakte übereinstimmen oder nicht übereinstimmen 303. Bei überwiegend oder nur unterschiedlichen Extrakten wird eine Extraktionskodierung 305 durchgeführt, wozu das automatische Durchsuchen der Adressdatenbank gehört. Ist das Ergebnis eindeutig, ist der Leseprozess erfolgreich beendet 309. Ist das nicht der Fall, so wird überprüft, ob die Anzahl der möglichen Adressalternativen einen Grenzwert übersteigt. Wenn ja, wird mit den Kodierergebnissen (den Adressalternativen) ein neuer OCR-Leseversuch 300 gestartet, wenn nein, erfolgt eine Selektionskodierung 307, so dass der Leseprozess erfolgreich beendet ist 309. Liegen überwiegend oder nur die gleichen Extrakte vor und die Anzahl der Adressalternativen übersteigt nicht einen festgelegten Grenzwert 304, so wird eine Selektionskodierung 307 durchgeführt. Liegt die Anzahl der Adressalternativen über dem Grenzwert, so erfolgt eine Extraktionskodierung 305. Der weitere Ablauf erfolgt dann wie beschrieben.

An einem einfachen Adressbeispiel wird der Vorteil noch einmal kurz erläutert.

### 1. Eindeutige Extraktion

Die Sendung wird am Sendungssortierer 100 eingelegt und der Scanner 120 liefert das Bild des Briefs mit der Adresse an die Ablaufsteuerung 170. Diese leitet das Bild zunächst an die OCR-Einrichtung 130 weiter. Da diese das zur Sortierung notwendige Adresselement (z.B. die Strasse) fast lesen kann, aber nicht eindeutig, liefert sie eine Selektionsliste mit den möglichen Alternativen (z.B. "HUECKLESTR" und "MUECKENSTR") zurück an die Ablaufsteuerung 170.
Sie prüft nun die gefundenen Alternativen gegen die spezifizierten Extraktionsregeln (z.B. "die ersten 4 Buchstaben vom Straßennamen") . Da die Extrakte für die gefundenen Alternativen unterschiedlich sind ("BUEC" und "MUEC"), ist es sicher, dass die Extraktionskodierung ein eindeutiges Ergebnis liefern wird. Da die Extraktionskodierung schneller als die Selektionskodierung ist, wird also nun das Bild zum Videokodierplatz 200 für Extraktionskodierung geschickt. Dort wird der Extrakt von dem Operateur eingegeben und dann zurück zur Ablaufsteuerung 170 geschickt. Diese kann durch einen Abgleich der von der OCR-Einrichtung 130 erstellten Adressalternativen mit dem Extrakt (z.B. "BUEC") eindeutig entscheiden dass es sich auf dem Brief um die "HUECKLESTR" handelt und schickt die entsprechende Sortierinformation an den Sendungssortierer 100, der die Sendung dann entsprechend sortiert.

### 2. Mehrdeutige Extraktion

Wie im ersten Fall auch wird die Sendung am Sendungssortierer 100 eingelegt und der Scanner 120 liefert das Bild der Sendung mit der Adresse an die Ablaufsteuerung 170. Diese leitet das Bild zunächst an die OCR-Einrichtung 130 weiter. Da diese das zur Sortierung notwendige Adresselement (z.B. die Straße) fast lesen kann, aber nicht eindeutig, liefert sie eine Selektionsliste mit den möglichen Alternativen (z.B. "BUECKLESTR" und "BUECKLEWEG") zurück an die Ablaufsteuerung 170.
Sie prüft die gefundenen Alternativen gegen die spezifizierten Extraktionsregeln (z.B. "die ersten 4 Buchstaben vom Straßennamen"). Da die beiden Extrakte in diesem Fall gleich sind (jeweils "BUEC"), würde ein Extraktionskodierschritt hier nichts bringen und die Ablaufsteuerung 170 schickt das Bild zum Videokodierplatz 200 für Selektionskodierung, wo die richtige Alternative vom Operateur ausgewählt wird (z.B. "BUECKLESTR"). Vom Videokodierplatz 200 wird diese Auswahl an die Ablaufsteuerung 170 zurückgeschickt und diese leitet dann die entsprechende Sortierinformation an den Sendungssortierer 100, der die Sendung dann entsprechend sortiert.

## Patentansprüche

1. Verfahren zum Lesen der Adressen von Sendungen, wobei ein Abbild der die Adressinformation aufweisenden Oberfläche jeder Sendung einer OCR-Einrichtung (130) zur automatischen Auswertung zugeführt wird und bei nicht eindeutig erkannter Adressinformation das zugehörige Abbild mit Teilergebnissen der OCR-Einrichtung (130) an eine Videokodiereinrichtung mit mehreren Videokodierplätzen (200) zur Videokodierung weitergeleitet wird, **dadurch gekennzeichnet, dass** bei einem nicht eindeutigen Leseergebnis aus der OCR-Einrichtung (130) von Adressalternativen als Teilergebnis des OCR-Prozesses automatisch mit vereinbarten Extraktionsregeln jeweils ein Extrakt erzeugt und ermittelt wird, wie viele der Extrakte übereinstimmen oder nicht übereinstimmen (302) und dass als nächstes bei überwiegend oder nur unterschiedlichen Extrakten mittels der Videokodiereinrichtung eine Extraktionskodierung (305) mit den vereinbarten Extraktionsregeln und bei überwiegend oder nur gleichen Extrakten als nächstes für die mit dem Abbild an die Videokodiereinrichtung übermittelten Adressalternativen eine Selektionskodierung (307) durchgeführt wird, wenn die Anzahl der Adressalternativen einen Maximalwert nicht übersteigt (304).

2. Verfahren nach Anspruch 1, **dadurch gekennzeichnet, dass** der Maximalwert der Anzahl der Adressalternativen, bei der nach dem automatischen Lesen die Selektionskodierung (307) durchgeführt wird, 10 beträgt.

3. Verfahren nach Anspruch 1, **dadurch gekennzeichnet, dass** der OCR-Einrichtung (130) zusätzlich zum betreffenden Abbild in einer vorher nach einem erfolglosen OCR-Lesevorgang durchgeführten Extraktionskodierung (305) ermittelte Adressteilinformationen zugeführt werden.

4. Verfahren nach Anspruch 3, **dadurch gekennzeichnet, dass** die der OCR-Einrichtung (130) zusätzlich zugeführten Adressteilinformationen den Postkode betreffen.

5. Vorrichtung zum Lesen der Adressen von Sendungen mit einem automatischen Adresslesesystem, das
- eine Vorrichtung zur Gewinnung von Abbildern von Sendungen (120) und deren Speicherung,
- eine OCR-Einrichtung (130) zur automatischen Auswertung von Adressinformationen aufweisenden Abbildern der Sendungsoberflächen,
- eine Einrichtung zur Videokodierung der die Adressinformationen enthaltenen Abbilder der Sendungsoberflächen mit mehreren Videokodierplätzen (200) und einer Ablaufsteuerung (170), welche die Videokodieraufträge auf die einzelnen Videokodierplätze (200) verteilt, aufweist,
**dadurch gekennzeichnet, dass**
die Ablaufsteuerung (170) derart ausgebildet ist, dass bei einem nicht eindeutigen Leseergebnis der OCR-Einrichtung (130) von Adressalternativen als Teilergebnis des OCR-Prozesses automatisch mit vereinbarten Extraktionsregeln jeweils ein Extrakt erzeugt und ermittelt wird, wie viele der Extrakte übereinstimmen oder nicht übereinstimmen und dass bei überwiegend oder nur unterschiedlichen Extrakten das betreffende Abbild an einen der für eine Extraktionskodierung vorgesehenen Videokodierplätze (200) zur Extraktionskodierung (305) mit den vereinbarten Extraktionsregeln und bei überwiegend oder nur gleichen Extrakten als nächstes das betreffende Abbild mit den Adressalternativen aus der OCR-Einrichtung (130) an einen der für eine Selektionskodierung vorgesehenen Videokodierplätze (200) zur Selektionskodierung (307) geleitet wird, wenn die Anzahl der Adressalternativen einen Maximalwert nicht übersteigt (304).

6. Vorrichtung nach Anspruch 5, **dadurch gekennzeichnet, dass** die Ablaufsteuerung (170) derart ausgebildet ist, dass der OCR-Einrichtung (130) zusätzlich zum betreffenden Abbild in einer vorher nach einem erfolglosen OCR-Lesevorgang durchgeführten Extraktionskodierung ermittelte Adressteilinformationen zugeführt werden.

## Claims

1. Method for reading the addresses of items of mail, an image of the surface of each item of mail having the address information being supplied to an OCR device (130) for automatic evaluation and, in the event of the address information not being recognized unambiguously, the associated image with partial results from the OCR device (130) being passed on to a video coding device having a plurality of video coding stations (200) for video coding, **characterized in that**, in the event of an ambiguous read result from the OCR device (130), in each case an extract is generated automatically by agreed extraction rules from address alternatives as a partial result from the OCR process, and the number of extracts which agree or disagree is determined (302), and **in that**, next, in the case of predominantly or only different extracts, extraction coding (305) is carried out with the agreed extraction rules by means of the video coding device and, in the case of predominantly or only identical extracts, selection coding (307) is carried out next for the address alternatives transmitted to the video coding device with the image, if the number of address alternatives does not exceed a maximum value (304).

2. Method according to Claim 1, **characterized in that** the maximum value of the number of address alternatives at which selection coding (307) is carried out after the automatic reading is 10.

3. Method according to Claim 1, **characterized in that** the OCR device (130) is supplied with partial address information determined during extraction coding (305) previously carried out after an unsuccessful OCR read operation, in addition to the relevant image.

4. Method according to Claim 3, **characterized in that** the partial address information additionally supplied to the OCR device (130) relates to the postcode.

5. Device for reading the addresses of items of mail with an automatic address reading system, which comprises
- a device for obtaining images of items of mail (120) and storing them,
- an OCR device (130) for the automatic evaluation of images of the surfaces of the items of mail having address information,
- a device for video coding the images of the surfaces of the items of mail containing the address information, comprising a plurality of video coding stations (200) and a sequence controller (170), which distributes the video coding jobs to the individual video coding stations (200),
**characterized in that**, the sequence controller (170) is designed in such a way that, in the case of an ambiguous read result from the OCR device (130), in each case an extract is generated automatically by agreed extraction rules from address alternatives as a partial result from the OCR process, and the number of extracts which agree or disagree is determined, and **in that**, in the case of predominantly or only different extracts, the relevant image is passed to one of the video coding stations (200) provided for extraction coding for the purpose of extraction coding (305) with the agreed extraction rules and, in the case of predominantly or only identical extracts, the relevant image with the address alternatives from the OCR device (130) is next passed to one of the video coding stations (200) provided for selection coding for the purpose of selection coding (307), if the number of address alternatives does not exceed a maximum value (304).

6. Device according to Claim 5, **characterized in that** the sequence controller (170) is designed in such a way that the OCR device (130) is supplied with partial address information determined during extraction coding previously carried out after an unsuccessful OCR read operation, in addition to the relevant image.

## Revendications

1. Procédé de lecture des adresses d'envois, dans lequel une reproduction de la face avant présentant l'information relative à l'adresse de chaque envoi est fournie à un dispositif (130) OCR (OCR = Optical Character Recognition : reconnaissance optique (ou automatique) de caractères) afin d'être analysé automatiquement et, au cas où l'information relative à l'adresse n'a pas été identifiée clairement, la reproduction correspondante avec les résultats partiels du dispositif (130) OCR est transmise à un dispositif de codage vidéo ayant plusieurs emplacements (200) de codage vidéo pour le codage vidéo,
**caractérisé en ce que**,
dans le cas d'un résultat de lecture qui n'est pas clair, on produit à partir du dispositif (130) OCR, automatiquement avec des règles d'extraction convenues par des alternatives d'adresses, un extrait en tant que résultat partiel du processus OCR et on détermine combien d'extraits concordent ou ne concordent pas (302) et
**en ce que**
ensuite, dans le cas d'extraits seulement ou d'une manière prépondérante, différents, on effectue un codage d'extraction (305) avec les règles d'extraction convenues au moyen du dispositif de codage vidéo et, dans le cas d'extraits d'une manière prépondérante ou seulement identiques, on effectue ensuite, un codage de sélection (307) pour les alternatives d'adresses transmises au dispositif de codage vidéo avec la reproduction, lorsque le nombre des alternatives d'adresses ne dépasse pas une valeur maximale (304).

2. Procédé suivant la revendication 1,
**caractérisé en ce que**
la valeur maximale du nombre d'alternatives d'adresses, pour lequel le codage de la sélection (307) est effectué après la lecture automatique, est égal à 10.

3. Procédé suivant la revendication 1,
**caractérisé en ce que**
des informations partielles déterminées relatives aux adresses sont fournies au dispositif (130) OCR en plus de la reproduction concernée au cours d'un codage d'extraction (305) effectué préalablement à une opération de lecture OCR infructueuse.

4. Procédé suivant la revendication 3,
**caractérisé en ce que**
les informations partielles relatives aux adresses fournies en plus au dispositif (130) OCR concernent le code postal.

5. Installation de lecture des adresses d'envois doté d'un système de lecture d'adresses automatique, qui a :
- un dispositif pour l'obtention de reproductions d'envois (120) et leur mémorisation,
- un dispositif (130) OCR pour l'analyse automatique de reproductions présentant des informations relatives aux adresses des faces avant des envois,
- un dispositif de codage vidéo des reproductions comportant les informations relatives aux adresses des faces avant des envois ayant plusieurs emplacements (200) de codage vidéo et une commande (170) du déroulement, qui distribue les ordres de codage vidéo sur les différents emplacements (200) de codage vidéo,
**caractérisée en ce que**
la commande (170) du déroulement est constituée de telle sorte que dans le cas d'un résultat de lecture qui n'est pas clair du dispositif (130) OCR il est produit, automatiquement avec des règles d'extraction convenues par des alternatives d'adresses, un extrait en tant que résultat partiel du processus OCR et il est déterminé combien d'extraits concordent ou ne concordent pas et
**en ce que**
dans le cas d'extraits seulement ou d'une manière prépondérante différents la reproduction concernée est transmise à l'un des emplacements (200) de codage vidéo prévus pour le codage d'extraction en vue du codage d'extraction (305) avec des règles d'extraction convenues et dans le cas d'extraits seulement ou d'une manière prépondérante identiques la reproduction concernée avec les alternatives d'adresses provenant du dispositif (130) OCR est transmise ensuite à l'un des emplacements (200) de codage vidéo prévus pour un codage de sélection en vue du codage de sélection (307), lorsque le nombre des alternatives d'adresses ne dépasse pas une valeur maximale (304).

6. Installation suivant la revendication 5,
**caractérisée en ce que**
la commande (170) du déroulement est constituée de telle sorte que des informations partielles déterminées relatives aux adresses sont fournies au dispositif (130) OCR en plus de la reproduction concernée au cours d'un codage de l'extraction réalisé préalablement à une opération de lecture OCR infructueuse.
